# EUROPEAN PATENT SPECIFICATION

(11) **EP 1 579 181 B1**
(45) Date of publication and mention of the grant of the patent: **17.01.2007**
(21) Application number: 03790032.1
(22) Date of filing: 21.11.2003
(51) Int. Cl.: G01F 23/24

(54) **PRODUCTS HAVING RFID TAGS FOR WIRELESS INTERROGATION**
PRODUKTE MIT RFID-ETIKETTEN ZUR DRAHTLOSER ABFRAGUNG
PRODUITS DOTES D'ETIQUETTES D'IDENTIFICATION PAR RADIOFREQUENCE PERMETTANT DE FOURNIR DES INFORMATIONS AUX CONSOMMATEURS DESDITS PRODUITS

(30) Priority: 21.11.2002 US 427934 P
(43) Date of publication of application: 28.09.2005
(73) Proprietor: S. C. Johnson & Son, Inc., Racine, WI 53403 (US)
(72) Inventor: LEONARD, Stephen, B., Franksville, WI 53126 (US); KIMBALL, James, F., Hales Corners, WI 53130 (US)
(74) Representative: Ruschke, Hans Edvard
(86) International application number: PCT/US2003/037662
(87) International publication number: WO 2004/049237

(56) References cited:
- EP-A- 0 807 442
- WO-A-02/100728
- WO-A-03/101022
- CA-A- 2 231 231
- US-A- 5 675 516
- US-A- 6 024 142
- US-A1- 2002 070 862
- US-A1- 2002 158 751
- US-B1- 6 483 473

## Description

### BACKGROUND OF THE INVENTION

Consumers often desire to know information regarding the many products in the household but the large number of consumer products makes keeping track of the condition of all products infeasible. Conditions that consumers often wish to know include age and time before replacement is necessary. At present, consumers often need to write a date on a product to keep track of its age of or continually check the amount remaining to estimate the time before replacement.

Many devices designed to dispense actives (also variously called dispensers) use refillable cartridges. Such devices include air fragrance dispensers. One problem encountered with such dispensers is that the cartridges are relatively long-lasting and when they finally do run out of product, the consumer is caught unprepared to replace the cartridge or they forget.

Document US-B1-6,483,473 shows a wireless communication device attached to a container of product. The device is a transponder able to provide identifying information about the product. It also has a sensor able to sense the constitution of the air around the package, or whether the package has been opened. This information is communicated to the user by the transponder.

There is a need in the prior art for a system able to track products in a household and give level of the products in their containers.

It is an object of the invention to provide consumers with information regarding products within the household.

### SUMMARY OF THE INVENTION

According to the present invention there is provided a system comprising: a container having a sensor including an RFID chip affixed to one portion thereof, a device for generating a signal from said sensor, and a remote receiver separate from said container for communicating said signal for alerting the user, characterized by contacts extending downwardly from said sensor and an electrical circuit broken when the level of product in said container falls below said contacts; said device for generating the signal being configured to generate said signal when said electrical circuit is broken for alerting a user that the level of product in the container is low.

The system alerts a consumer when a cartridge is near empty. An automated triggering and signaling device is applied to the dispenser or bait/ trap to signal the consumer when the cartridge is near empty or the trap is being used. Simple electrical or electromechanical mechanisms trigger the signaling device and communicate the status to the consumer via a hand-held PDA or other capable device. When the designated time period of the refill is known, a countdown can be started when the refill is installed, and an automated status of near empty can be signaled after a predetermined time.

### BRIEF DESCRIPTION OF THE DRAWINGS

**FIGURE 1a** depicts a trigger spray container having a near-empty indicator;

**FIGURE 1b** depicts a trigger spray container having an alternative near-empty indicator;

**FIGURE 2** depicts an aerosol can having a functional label incorporating a near-empty indicator;

**FIGURE 3** depicts containers having near-empty indicators communicating with a central base station;

**FIGURE 4a** depicts a dispenser having an active refill incorporating a near-empty indicator;

**FIGURE 4b** shows a dispenser having an alternative refill incorporating a near-empty indicator;

### DETAILED DESCRIPTION OF THE INVENTION

RFID is a type of automatic identification technology, similar to bar code technology, except that RFID uses radio frequency instead of optical signals. The reader (or reader/writer) produces a low-level radio frequency magnetic field, typically either at 125 KHz or at 13.56 MHz. It must be noted that other frequencies can be used depending on the application. This magnetic field emanates from the reader (or reader/writer) by means of a transmitting antenna, typically in the form of a coil. Meanwhile, an RFID tag, typically including an antenna and an integrated surface, can be placed on any product.

The RFID system can be either read-only or read/write. Read-only systems, as their name suggests, permit the reader to receive information from the tag, but not vice-versa. Read/write systems, on the other hand, permit two-way communication between the tag and the reader/writer, and each of these components typically include an electronic memory for storing information received from the other component.

Figure la depicts a trigger spray container **10** having a near-empty indicator. The near-empty indicator consists of an RFID (radio frequency identification) tag **12** attached to the interior of the container. The RFID tag **12** has a pair of contacts **14** extending downwardly from the tag. When the contents of the container reach a level below the end of the contacts **14,** an electrical circuit is broken, causing the RFID tag to send a signal to a monitoring unit **20.** Power for the RFID tag to signal the reader is provided by a printed battery. The monitoring unit **20** has a series of LED lights, each LED light designating a particular product being monitored. In response to a signal from the RFID tag **12,** the LED light will illuminate to indicate to the user or the consumer that the product will soon be in need of replacement. The signal may be audible.

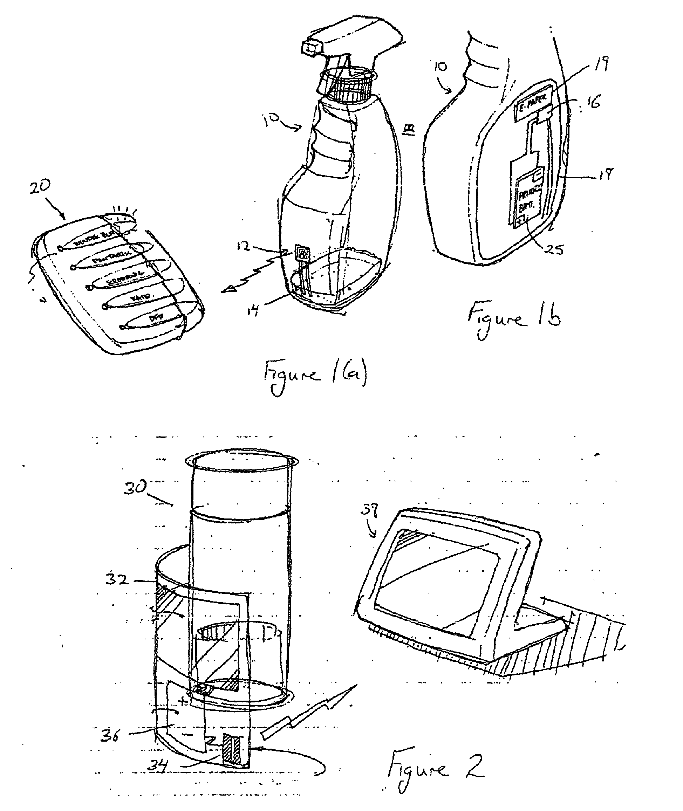

Figure 1b depicts an alternative near-empty indicator. The trigger spray container **10** has a flexible printed circuit board **16** mounted thereon with a pair of contacts extending downwardly inside of the container. In a manner similar to the embodiment shown in Figure la, the reduction in level of product below the terminal ends of the contacts **18** causes the printed circuit board **16** to display a message on a display, such as e-paper attached to the container. Power for the printed circuit board and display is provided by a printed battery **25** adhered to the container exterior.

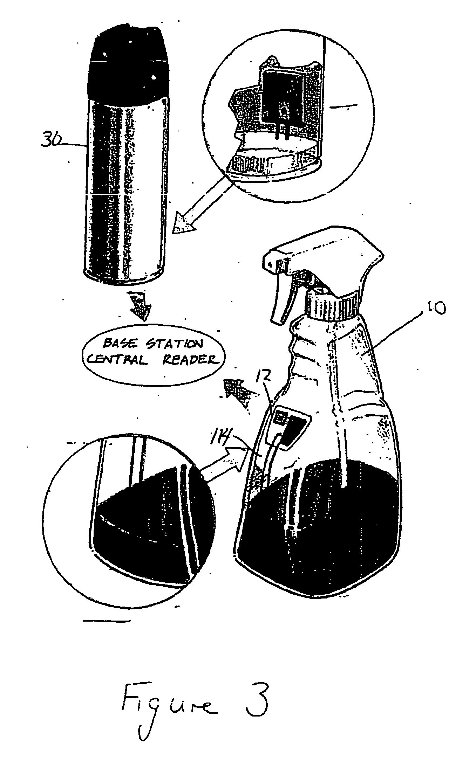

Figure 2 depicts the incorporation of a near-empty indicator on an aerosol can **30.** A functional label **32** is attached to the can. The functional label **32** includes a refill sensor **34.** When the contents of the container fall below a certain level, the refill sensor **34** sends a signal to a base monitor **38.** The base monitor **38** is able to display a printed message to the user indicating the need to replace the product in the very near future. The refill sensor is provided power by a printable battery **36** incorporated into the label.

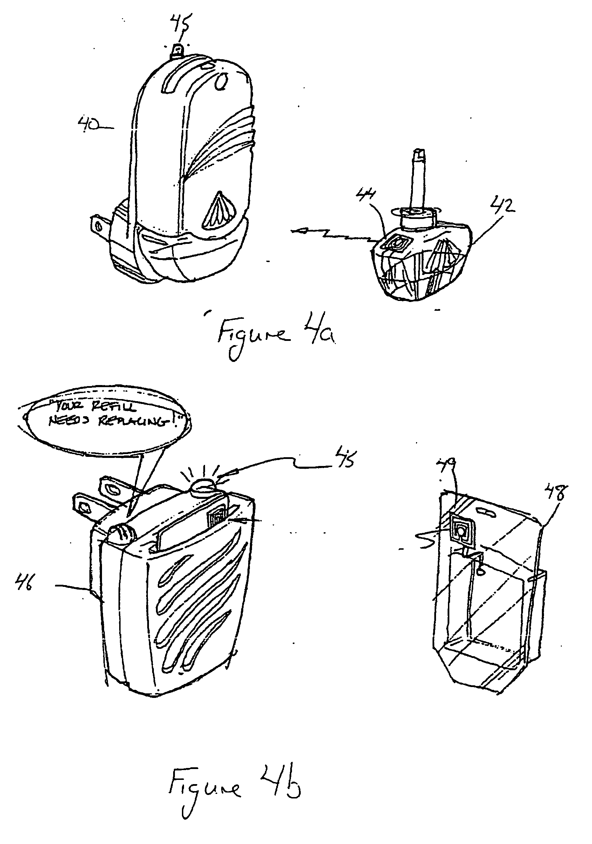

Figure 3 depicts the ability for a plurality of containers to interact with a single central base station. The trigger spray container **10** has an RFID tag **12.** In this instance, the contacts **114** are molded into the container. The spray can **30** has a near-empty indicator attached to the interior of the can during manufacturing. Both of these containers communicate with a base monitor to alert the consumer that the level of product remaining in either respective container has reached a certain, predetermined low level.

Figure 4a shows a plug-in appliance for discharging fragrances, insecticides or similar actives. The actives are contained in a replaceable cartridge **42** received by the plug-in appliance **40** and having an RFID tag **44.** Contacts from the RFID tag extend downwardly from the tag and a reduction in the amount of liquid or gel contained in the refill breaks the electrical circuit when the product falls below a certain level. The signal sent from the RFID tag alerts the consumer of this condition. In this instance, the RFID tag causes indicator light 45 at the top of the plug-in appliance to illuminate. The plug-in appliance can also have an audible message in response to a signal from the RFID tag. An additional embodiment would have the RFID tag signal a timer in the heater 40 to start. When the timer reaches a set time limit a signal is activated indicating that the refill is near empty.

Figure 4b shows a similar plug-in appliance **46** having a different type of cartridge **48** incorporating an RFID tag **49** having contacts extending downwardly into the container that break an electrical circuit when the product falls below a certain level. In the same manner, after such an event occurs, the RFID tag causes an indicator light **45** to illuminate. An additional embodiment would have the RFID tag signal a timer in the heater **46** to start. When the timer reaches a set time limit a signal is activated indicating that the refill is near empty.

Although specific components, materials, configurations, arrangements, etc. have been shown and described with reference to several preferred embodiments, our invention is not limited to these specific embodiments. One of ordinary skill in the art will realize that various modifications and variations are possible within our invention as defined by the accompanying claims.

## Claims

1. A system comprising:
a container (10) having a sensor (12) including an RFID chip affixed to one portion thereof,
a device for generating a signal from said sensor (12), and
a remote receiver (20) separate from said container (10) for communicating said signal for alerting the user, **characterized by**
contacts (14, 114) extending downwardly from said sensor (12); and
an electrical circuit broken when the level of product in said container (10) falls below said contacts;
said device for generating the signal being configured to generate said signal when said electrical circuit is broken for alerting a user that the level of product in the container (10) is low.

2. A system according to claim 1, wherein the container comprises a trigger spray (10).

3. A system according to claim 1, wherein the container comprises an aerosol can (30).

4. A system according to claim 1 or 2, wherein said sensor (12) signals a timer in a primary device, base station or similar device to countdown a preset time to refill.

5. A system according to claim 1, wherein the contacts (114) are moulded into the container.

6. A system according to claim 1, wherein the remote receiver (20) is included in a base station monitoring the levels of product remaining in each of a plurality of containers, and producing a signal to alert the user when a respective container has reached a certain pre-determined low level of product.

7. A system according to claim 1, included in a plug-in appliance for discharging fragrancies, insecticides or similar actives from the container, the container consisting of a replaceable cartridge (42) received by the plug-in appliance (40) where the cartridge carries the RFID tag (44), the remote receiver being contained in the body of the plug-in device and having an indicator light (45) for communicating the signal to alert the user.

8. A system according to claim 7, further including a device to generate an audible message in response to the signal to alert the user.

## Patentansprüche

1. System mit:
einem Behälter (10) mit einem Fühler (12) mit einem RFID-Chip, der an einem Teil desselben befestigt ist;
einer Einrichtung zum Erzeugen eines Signals, das der Fühler (12) abgibt; und
einem vom Behälter (10) getrennten, abgesetzt angeordneten Empfänger (20), mit dem das Signal weitergebbar ist, um die Aufmerksamkeit des Benutzers zu erregen; **gekennzeichnet durch**
Kontakte (14, 114), die vom Fühler (12) abwärts verlaufen; und
einen elektrischen Stromkreis, der geöffnet wird, wenn das Niveau des Produkts im Behälter (10) unter die Kontakte absinkt;
wobei die Einrichtung zum Erzeugen des Signals so konfiguriert ist, dass sie das Signal erzeugt, wenn der elektrische Stromkreis öffnet, um einen Benutzer darauf aufmerksam zu machen, dass das Niveau des Produkts im Behälter (10) niedrig ist.

2. System nach Anspruch 1, bei dem der Behälter ein Sprühbehälter (10) mit Abzugsbügel ist.

3. System nach Anspruch 1, bei dem der Behälter eine Aerosoldose (30) ist.

4. System nach Anspruch 1 oder 2, bei dem der Fühler (12) einem Zeitgeber in einer Primäreinrichtung, einer Basisstation od. dergl. signalisiert, eine vorbestimmte Zeitspanne bis zum Nachfüllen abwärts zu zählen.

5. System nach Anspruch 1, bei dem die Kontakte (114) in den Behälter eingeformt sind.

6. System nach Anspruch 1, bei dem der abgesetzt angeordnete Empfänger (20) sich in einer Basisstation befindet, die die in einer Vielzahl von Behältern jeweils verbleibenden Produktniveaus überwacht und ein Signal erzeugt, um die Aufmerksamkeit des Benutzers zu erregen, wenn in einem der Behälter das Produkt ein vorbestimmt niedriges Niveau erreicht hat.

7. System nach Anspruch 1 in einem Einsteckgerät zur Ausgabe von Duftstoffen, Insektiziden od. dergl. Wirkstoffen aus dem Behälter, wobei der Behälter aus einer auswechselbaren Kartusche (42) besteht, die vom Einsteckgerät (40) aufnehmbar ist und ein RFID-Etikett (44) trägt, und der abgesetzte Empfänger sich im Hauptteil des Einsteckgeräts befindet und eine Anzeigelampe (45) aufweist, mit der das Signal an den Benutzer übertragbar ist, um seine Aufmerksamkeit zu erregen.

8. System nach Anspruch 7 weiterhin mit einer Vorrichtung zum Erzeugen einer hörbaren Meldung in Reaktion auf das Signal zum Erregen der Aufmerksamkeit des Benutzer.

## Revendications

1. Système comprenant :
un conteneur (10) ayant un capteur (12) comprenant une puce RFID fixée sur une partie de celui-ci,
un dispositif destiné à générer un signal provenant dudit capteur (12), et
un récepteur distant (20) séparé dudit conteneur (10) afin de communiquer ledit signal de façon à alerter l'utilisateur, **caractérisé par**
des contacts (14, 114) s'étendant vers le bas depuis ledit capteur (12) ; et
un circuit électrique coupé lorsque le niveau de produit dans ledit conteneur (10) chute au-dessous desdits contacts ;
ledit dispositif destiné à générer le signal étant configuré afin de générer ledit signal lorsque ledit circuit électrique est coupé afin d'alerter un utilisateur que le niveau de produit dans le conteneur (10) est faible.

2. Système selon la revendication 1, dans lequel le conteneur comprend un pistolet à gâchette (10).

3. Système selon la revendication 1, dans lequel le conteneur comprend une bombe aérosol (30).

4. Système selon la revendication 1 ou 2, dans lequel ledit capteur (12) alerte un minuteur dans un dispositif primaire, une station de base ou un dispositif similaire afin de décompter un temps de recharge préréglé.

5. Système selon la revendication 1, dans lequel les contacts (114) sont moulés dans le conteneur.

6. Système selon la revendication 1, dans lequel le récepteur distant (20) est inclus dans une station de base surveillant les niveaux de produit restant dans chacun d'une pluralité de conteneurs, et produisant un signal afin d'alerter l'utilisateur lorsqu'un conteneur respectif a atteint un certain niveau de produit faible prédéterminé.

7. Système selon la revendication 1, inclus dans un appareil à fiches destiné à diffuser des parfums, des insecticides ou des produits actifs similaires depuis le conteneur, le conteneur étant composé d'une cartouche remplaçable (42) reçue par l'appareil enfichable (40), dans lequel la cartouche porte le marqueur RFID (44), le récepteur distant étant contenu dans le corps du dispositif enfichable et ayant un témoin lumineux (45) destiné à communiquer le signal afin d'alerter l'utilisateur.

8. Système selon la revendication 7, comprenant en outre un dispositif destiné à générer un message sonore en réponse au signal destiné à alerter l'utilisateur.
